Europäisches Patentamt

(19) European Patent Office

Office européen des brevets

(11) Publication number: **0 058 787**
**A1**

## (12) EUROPEAN PATENT APPLICATION

(21) Application number: **81300694.7**

(22) Date of filing: **19.02.81**

(51) Int. Cl.³: **G 01 D 9/34**

(43) Date of publication of application: **01.09.82**
Bulletin **82/35**

(84) Designated Contracting States: **AT BE CH DE FR GB IT LI LU NL SE**

(71) Applicant: **CHESSELL LIMITED, Southdown View Road Broadwater Trading Estate, Worthing BN14 8NL. (GB)**

(72) Inventor: **Houldsworth, John, 2, New Cottages The Holt, Washington, Nr. Pulborough West Sussex (GB)**

(74) Representative: **Messulam, Alec Moses et al, MARKS & CLERK 57/60 Lincoln's Inn Fields, London WC2A 3LS (GB)**

(54) **Chart recorder.**

(57) A chart recorder is described in which the writing head (14) is rotatable by a motor (16) to position any one of several writing tips (20) over the paper. The motor (16) is mounted on the same carriage as the writing head (14) for movement relative to the paper.

EP 0 058 787 A1

# CHART RECORDER

The present invention relates to a chart recorder.

As is well known, a chart recorder is a device which provides a permanent trace on a recording medium showing the variations of a measured parameter with time. The recording medium, for example paper, is moved past a writing head which itself moves transversely with respect to the paper in dependence upon the measured parameter.

Chart recorders are known which plot a plurality of parameters simultaneously using different heads which are staggered from one another in a suitable manner.

The present invention seeks to provide a simplified chart recorder for recording traces of a plurality of parameters.

In accordance with the present invention, there is provided a chart recorder for producing a record of a plurality of parameters, having a writing head movable transversely with respect to the direction of movement of a recording medium, wherein the writing head includes a rotatable holder supporting a plurality of pens each including an ink reservoir and a writing tip circumferentially spaced about its periphery and a motor movable with the holder for rotating the holder

-2-

to select a writing tip in dependence upon the parameter being recorded.

The traces are in the form of interrupted lines each line segment being produced by actuating the head to bring the writing tip into contact with the recording medium when the transverse position of the writing head with respect to the recording medium corresponds to the value of the parameter being recorded.

Conveniently, the pens may be felt tipped pens of different colours located in the holder. The term " felt-tipped" is being used in its looser sense to include tips of other than felt, for example, fibre tips and tips of sintered plastics material.

Conveniently, the motor may have a plurality of coils circumferentially distributed about the axis of the holder and a permanent magnet rotor having diammetrically opposed north and south poles facing the ends of the coils.

Advantageously, the axes of the coils are parallel to the axis of the holder and the north and south poles of the rotor are formed by arcuate coplanar pieces.

To provide still more accurate angular positioning of the holder, it is advantageous for the holder to include recesses arranged to co-operate with a detent to ensure that the holder can only adopt predetermined angular positions. If desired the detent and recess may act as a pawl and ratchet to ensure rotation of the holder is only one direction.

The pole faces may each conveniently extend over an angle sufficient to align each pole face with a plurality of coils so as to increase the torque applied to the rotor.

In order to actuate the writing head to produce a marking on the recording medium, the motor may conveniently be pivoted on a carriage transversely slidable with respect to the medium and an electro-magnet may be provided to rotate the motor with respect to the carriage to cause the selected writing point to mark the recording medium.

The position of the writing head with respect to the recording medium may be determined by means of a closed feedback loop comparing the actual position of the writing head as determined by an analogue sensor with the signal to be recorded. Alternatively, a digitally operating open loop may serve to position the writing head in dependence upon the magnitude of the parameter to be recorded.

The parameters may be charted on the recording medium in a predetermined order but preferably the order is selected in each line in dependence upon the magnitude of the parameters in that line whereby to minimise the movement of the writing head relative to the medium.

The invention will now be described further, by way of example, with reference to the accompanying drawings, in which:

Figure 1 is a schematic representation of a section through a chart recorder in accordance with the invention, and

Figure 2 is a section through a motor incorporated in the chart recorder of Figure 1.

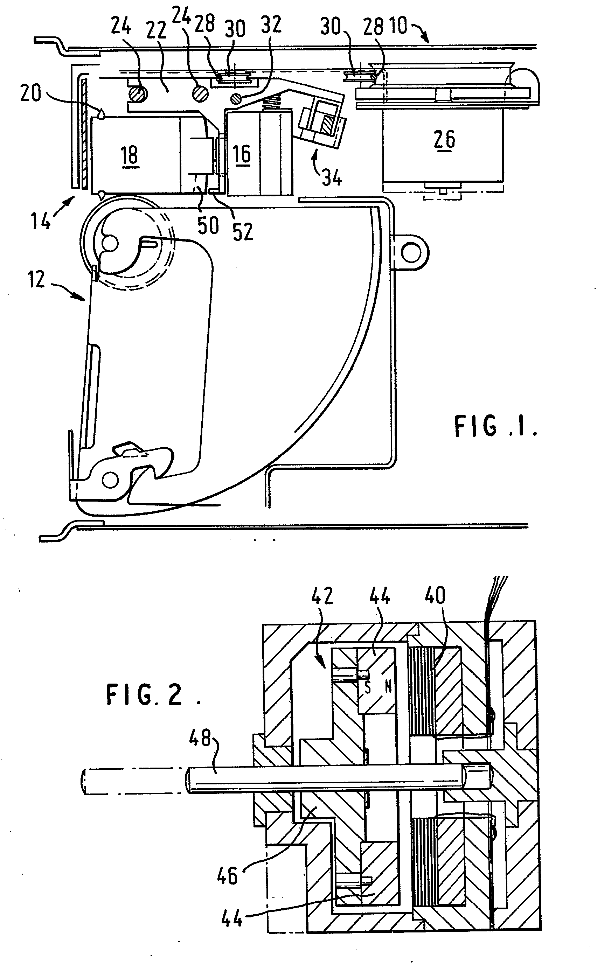

The chart recorder in Figure 1 comprises a housing 10 which contains a paper feed mechanism generally designated 12 in which paper is guided steadily past a writing head 14 which is movable transversely with respect to the paper. The writing head 14 includes a motor 16 which serves to drive a pen-holder 18 carrying six felt tipped pens, the tips of which are designated 20. The tips 20 are circumferentially spaced about the periphery of the holder 18. The motor 16 and the pen holder 18 are supported by a carriage 22 which is guided for transverse movement with respect to the paper by means of a pair of rails 24. The displacement of the carriage 22 is effected by means of a motor

0058787

-5-

26 connected to the carriage by means of a cord 28 guided over pulleys 30.

The motor 16 is pivotable relative to the carriage 22 about an axis 32, pivoting being effected by actuation of an electro magnet 34. When acuated, the electro-magnet 34 serves to rotate the motor 16 and the pen holder 18 counterclockwise as viewed in Figure 1 to cause the relevant writing tip 20 to come in contact with the paper. An electrical measuring unit, not shown, is also incorporated in the housing 10 and determines when the transverse position of the writing head 14 corresponds with the magnitude of a parameter to be recorded to cause actuation of the electro-magnet 34. The electrical unit may comprise an amplifier followed by a comparator for comparing the actual position of the writing head with the position corresponding to the magnitude of the parameter to be recorded.and serving to apply an error signal to the motor 26. Alternatively, the control of the position of the writing head may be effected by means of an open loop wherein the position of the motor 26 may, for example, be digitally controlled in dependence upon the magnitude of the parameter to be recorded.

-6-

As previously stated, the pen holder 18 carries six circumferentially spaced pens each of a different colour and each intended to represent a different parameter. The motor 16 serves to position the appropriate pen corresponding to the next parameter to be recorded. The motor 16 is shown in more detail in Figure 2 and comprises six separate coils 40 the axes of which are parallel to the axis of rotation of the holder 18. The rotor 42 comprises two magnets 44 in the form of semi-circular segments mounted on a circular plate 46 connected to the output shaft 48 of the motor. Three of the electro-magnets 40 are supplied with a current of a first polarity whilst the remaining three are fed with a current of the opposite polarity. This results in the rotation of the rotor 42 to align the permanent magnets 44 with the oppositely poled electro-magnets 40. By energising three electro-magnets of any one polarity at a time, a substantial torque may be developed by the motor.

To ensure precise positioning of the pen holder 18, the base of the pen holder includes six recesses 50 of which only one is shown in Figure 1 in dotted lines. A detent 52 projects from the carriage 22 and engages one of the recesses 50 when the holder 18 is rotated so as to provide precise positioning of the felt tip 20. If desired the detent 52 may be shaped as a pawl and the recesses 50 may form a
ratchet whereby to permit rotation in only one direction.

The order of marking of the different colours
on the paper may be fixed but this could result in
several tranverses of paper by the writing head
during each scan line.  To avoid unnecessary movement
of the writing head, a memory circuit is incorporated
in the chart recorder (not illustrated in the drawings)
in which are stored the values to be printed in the
next line and the colours are selected in order of
increasing displacement along the recording medium.

0058787

-1-

<u>CLAIMS</u>

1.    A chart recorder for producing a record of a plurality of parameters having a writing  head movable transversely with respect to a recording medium and characterised in that the writing head (14) includes a rotatable holder (18) supporting a plurality of pens each including an ink reservoir and a writing tip (20) circumferentially spaced about its periphery and a motor (16) movable with the holder (18) for rotating the holder (18) to select a writing tip (20) in dependence upon the parameter being recorded.

2.    A chart recorder as claimed in Claim 1, wherein the pens are felt tipped pens of different colours.

3.    A chart recorder as claimed in Claim 1 or Claim 2, wherein the motor has a plurality of coils (40) circumferentially distributed about the axis of the holder (18) and a permanent magnet rotor (42) having diammetrically opposed north and south poles (44) facing the end of the coils (40).

4.    A chart recorder as claimed in Claim 3,wherein the ax s of the coils (40) are parallel to the axis of the holder (18) and the north and south poles (44) of the rotor are formed by arcuate coplanar pieces.

5.　　A chart recorder as claimed in any preceding Claim, wherein the motor is pivoted on a carriage transversely slidable with respect to the recording medium and an electro-magnet (34) is provided to rotate the motor (16) with respect to the carriage (22) to cause the selected writing point (20) to mark the recording medium.

6.　　A chart recorder as claimed in Claim 5, and appended to Claim 3 or 4, wherein at least one recess (50) and at least one detent are provided on the holder and the carriage to ensure that the holder can only adopt predetermined angular positions during writing.

7.　　A chart recorder as claimed in Claim 6, wherein the detent and the said at least one recess constitute a pawl and ratchet mechanism to permit rotation of the holder (18) in only one direction.

8.　　A chart recorder as claimed in any preceding Claim, wherein the position of the writing head with respect to the recording medium is determined by means of a closed feed back loop comparing the actual position of the writing head (14) determined by an analogue sensor with the signal to be recorded.

0058787

-3-

9.    A chart recorder as claimed in any one of
Claims 1 to 7, wherein a digitally operating open
loop is provided to position the writing head
independence upon the magnitude of the parameter
to be recorded.

10.    A chart recorder as claimed in any preceding
Claim, wherein the order of recording of the parameters
is selected in each line independence upon the magnitude
of the parameters in that line so as to minimise the
movement of the writing head relative to the recording
medium.

- 1 -

Amended
Claims

CLAIMS

1.    A chart recorder for producing a record of a plurality of parameters, having a writing head (14) movable transversely with respect to a recording medium, the writing head including a rotatable holder (18) supporting a plurality of writing tips (20) circumferentially spaced about its periphery and a motor (16) movable with the holder (18) for rotating the holder (18) to select a writing tip (20) in dependence upon the parameter being

recorded, <u>characterised in that</u> the motor (16) for rotating the holder (18) is an axial field motor.

2.    A chart recorder as claimed in Claim 1, wherein the writing tips are felt tipped pens of different colours.

3.    A chart recorder as claimed in Claim 1 or Claim 2, wherein the motor (16) has a plurality of coils (40) circumferentially distributed about the axis of the motor (16), and a permanent magnet rotor (42) having diametrically opposed north and south poles facing the end of the coils (40).

4.    A chart recorder as claimed in Claim 3, wherein the coils (40) are positioned on an annular backing plate within the casing of the motor (16).

5.    A chart recorder as claimed in Claim 3 or Claim 4, wherein the north and south poles (44) of the rotor are formed by

arcuate coplanar pieces.

-2-    Amended
         Claims

6.     A chart recorder as claimed in any of Claims 3 to 5, wherein the rotor (42) comprises two semi-circular permanent magnets (44), and there is an even number of coils (40) which can be energised in two groups.

7.     A chart recorder as claimed in any preceding Claim, wherein the motor is pivoted on a carriage (22) transversely slidable with respect to the recording medium and an electro-magnet (34) is provided to pivot the motor (16) with respect to the carriage (22) to cause the selected writing point (20) to mark the recording medium.

8.     A chart recorder as claimed in Claim 7, wherein at least one recess (50) and at least one detent (52) are provided on the holder (18) and the carriage (22) to ensure that the holder (18) can only adopt predetermined angular positions during writing.

9.     A chart recorder as claimed in Claim 8, wherein the detent (52) and the said at least one recess (50) constitute a pawl and ratchet mechanism to permit rotation of the holder (18) in only one direction.

10.    A chart recorder as claimed in any preceding Claim, wherein the position of the writing head (14) with respect to the recording medium is determined by means of a closed feed back loop comparing the actual position of the writing head (14) determined by an analogue sensor with the signal to be recorded.

-3-            Amended
                Claims

11.    A chart recorder as claimed in any one of Claims 1 to 9,
wherein a digitally operating open loop is provided to position the
writing head in dependence upon the magnitude of the parameter to be
recorded.

12.    A chart recorder as claimed in any preceding Claim, wherein
the order of recording the parameters is selected in each line
in dependence upon the magnitude of the parameters in that line
so as to minimise the movement of the writing head relative to the
recording medium.

0058787

1/1

FIG .I.

FIG. 2 .

European Patent Office

**EUROPEAN SEARCH REPORT**

Application number

EP 81 30 0694

| | DOCUMENTS CONSIDERED TO BE RELEVANT | | CLASSIFICATION OF THE APPLICATION (Int Cl.) |
|---|---|---|---|
| Category | Citation of document with indicatio , where appropriate. of relevant passages | Relevant to claim | G 01 D 9/34 |
| X | FR - A - 2 447 813 (SIEMENS) <br> * Figures; claims * | 1,3-5, 8,9 | |
| A | DE - A - 2 725 456 (DIA-NIELSEN) <br> * Figures * | 6,7 | |
| A | US - A - 3 409 898 (DAVIES) <br> * Figures * | 6,7 | TECHNICAL FIELDS SEARCHED (Int. Cl.) |
| A | US - A - 4 170 780 (CARON et al.) <br> * Figures * | 6,7 | G 01 D 9/04 <br> 9/30 <br> 9/32 <br> 9/34 <br> 9/36 <br> 15/16 |
| A | US - A - 4 129 876 (HUBBARD) <br> * Column 3, lines 5-13 * | 2 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family corresponding document

The present search report has been drawn up for all claims

| Place of search | Date of completion of the search | Examiner |
|---|---|---|
| The Hague | 15-10-1981 | LLOYD |

EPO Form 1503 1   06.78